# EUROPÄISCHE PATENTSCHRIFT

(11) **EP 2 709 217 B1**
(45) Veröffentlichungstag und Bekanntmachung des Hinweises auf die Patenterteilung: **09.08.2017**
(21) Anmeldenummer: 12184057.3
(22) Anmeldetag: 12.09.2012
(51) Int. Cl.: H01R 43/00

(54) **Maschine für die Montage von Kabeltüllen**
Machine for assembling cable sleeves
Machine pour le montage de passe-câbles

(43) Veröffentlichungstag der Anmeldung: 19.03.2014
(73) Patentinhaber: Schleuniger Holding AG, 3608 Thun (CH)
(72) Erfinder: Wosinski, Eugen, 8808 Pfäffikon (CH); Imfeld, Ruedi, 6312 Steinhausen (CH); Meierhans, Ivo, 6005 Luzern (CH)
(74) Vertreter: Patentbüro Paul Rosenich AG

(56) Entgegenhaltungen:
- EP-A1- 1 912 296
- EP-A2- 0 462 923

## Beschreibung

Die Erfindung betrifft eine Maschine für die Montage von Kabeltüllen (Seals) auf einem Draht/Kabel nach dem Oberbegriff des Anspruchs 1, umfassend
- einen in einem Montagebereich angeordneten Hohldorn, welcher dazu eingerichtet ist, die Kabeltülle auf seinem Aussendurchmesser und den Draht / das Kabel in seinem Innendurchmesser aufzunehmen,
- zwei gegeneinander bewegbare und im Montagebereich angeordnete Abstreifbacken, welche dazu eingerichtet sind, die auf den Hohldorn aufgeschobene Kabeltülle in einer Schliessstellung zu umgreifen, und
- einen Antrieb, welcher dazu eingerichtet ist, die Kabeltülle auf den Draht / das Kabel durch Ausführen einer Relativbewegung zwischen dem Hohldorn und den Abstreifbacken aufzuschieben,
- wobei die Abstreifbacken drehbar mit einem Schwenkbereich zwischen ihrer Schliessstellung und ihrer Offen-Stellung gelagert sind.

Weiterhin betrifft die Erfindung ein Verfahren zur Montage einer Kabeltülle auf einem Draht/Kabel nach dem Oberbegriff des Anspruchs 14, umfassend die Schritte:
- Aufschieben der Kabeltülle auf einen Hohldorn,
- Umgreifen der Kabeltülle mit schliessbaren beziehungsweise offenbaren Abstreifbacken,
- Einschieben des Drahts/Kabels in den Hohldorn,
- Aufschieben der Kabeltülle auf den Draht / das Kabel durch Ausführen einer Relativbewegung zwischen dem Hohldorn und den Abstreifbacken und
- Öffnen der Abstreifbacken, wobei die Abstreifbacken beim Öffnen gedreht werden.

Eine Maschine beziehungsweise ein Verfahren der genannten Art sind grundsätzlich bekannt. Beispielsweise offenbart die EP 1 022 821 A1 dazu ein Verfahren zur Tüllenbestückung von elektrischen Kabeln, wobei eine Tülle aus einer Förderschiene von einem Zentrierdorn aufgenommen und auf ein Aufspreizteil aufgeschoben wird. Anschliessend wird das Aufspreizteil in eine Achsposition verschwenkt, die mit der Längsachse des mit einer Tülle zu bestückenden Kabels übereinstimmt, wobei eine erste relative Bewegung zwischen Aufspreizteil und Abstreifbacken stattfindet. Nach dem Schliessen der Abstreifbacken zur Fixierung der Tülle in diesem wird eine zweite relative Bewegung zwischen dem Aufspreizteil und den Abstreifbacken einerseits und dem zu bestückenden Kabel andererseits durchgeführt und schliesslich in einer dritten relativen Bewegung zwischen dem Aufspreizteil einerseits und den Abstreifbacken und dem zu bestückenden Kabel andererseits, die Tülle vom Aufspreizteil abgezogen, so dass nach dem Öffnen der Abstreifbacken das bestückte Kabel entnehmbar ist.

In der EP 1 022 821 A1 wird keine Lösung zur Prüfung der Qualität der bestückten Kabel offenbart, wodurch sich im Produktionsprozess Kabel mit ordnungsgemäss aufgeschobene Tüllen mit qualitativ schlechter konfektionieren Kabeln bis hin zu unbrauchbarem Ausschuss vermischen. In einem nachfolgenden Schritt müssen die konfektionierten Kabel daher wieder mühselig hinsichtlich ihrer Qualität sortiert werden.

Die EP 0 462 923 A2 offenbart eine weitere Maschine zur Kabeltüllenbestückung mit ähnlichem Aufbau wie die EP 1 022 821 A1, welche aber ebenfalls keine Möglichkeit zur Kontrolle einer montierten Kabeltülle zeigt.

Ein Verfahren zur elektronisch unterstützen Kontrolle eines abisolierten Kabelendes ist grundsätzlich aus der JP 9171878 A bekannt. Die JP 9171878 A offenbart dazu eine Maschine, welche eine auf ein Kabelende ausgerichtete und oberhalb desselben angeordnete Videokamera umfasst, mit der das Kabelende optisch beziehungsweise visuell betrachtet werden kann. Einen Hinweis auf Anwendung dieser Kamera zur Überprüfung von Kabel-Tüllen fehlt. Mit dieser Anordnung kann auch keine Tüllenkontrolle stattfinden, wenn die Tüllen wie an sich bekannt durch Abstreifbacken gehalten werden, da diese mit dem Sichtfeld der Kamera kollidieren würden.

Ein weiterer Nachteil der in der EP 1 022 821 A1 offenbarten Maschine ist, dass die Abstreifbacken beim Öffnen und Schliessen horizontal verfahren werden, wodurch in der Breite der Maschine ein relativ hoher Platzbedarf resultiert. Dies ist insofern von Nachteil, als in einer Fabrik zur Kabelkonfektion in der Regel mehrere verschiedene Maschinen nebeneinander aufgestellt sind, und die Maschinenanordnung insgesamt relativ breit ist und vergleichsweise viel Platz benötigt.

Häufig sind auch Anordnungen anzutreffen, bei denen mehrere Maschinen in einem Kreis oder Kreissegment aufgestellt sind, in dessen Zentrum sich ein Roboter zur Manipulation der zu konfektionierenden Kabel befindet. Dieser Roboter reicht ein Kabel von einer Fertigungsstation zur nächsten weiter. Je breiter die einzelnen Maschinen sind, insbesondere in deren Stirnbereich, desto grösser wird auch der dafür nötige Kreis, beziehungsweise desto länger muss der Arm des Roboters sein, damit dieser die einzelnen Maschinen erreichen kann. Dies ist insbesondere deswegen von Nachteil, da die bei der Bewegung auftretenden Beschleunigungen, Kräfte und die nötige Antriebsleistung bei vergrösserter Länge des Roboterarms überproportional steigen. Da die angesprochenen Parameter nicht beliebig gesteigert werden können, muss mit einer verringerten Bewegungsgeschwindigkeit des Roboters gerechnet werden, wodurch sich die Bearbeitungszeit zur Herstellung von konfektionierten Kabeln insgesamt deutlich erhöht. Im Lichte der extrem hohen Stückzahlen und Taktraten bei der Kabelherstellung bedeutet dies einen gravierenden Nachteil.

Die EP 0 462 923 A2 offenbart eine Maschine zur Kabeltüllenbestückung mit drehbar gelagerten Abstreifbacken, welche beim Öffnen horizontal ausschwenken. Die für die EP 1 022 821 A1 angesprochene Platzproblematik ergibt sich daher auch für die in der EP 0 462 923 A2 offenbarten Maschine.

Eine Aufgabe der vorliegenden Erfindung ist es somit, eine verbesserte Maschine beziehungsweise ein verbessertes Verfahren für die Montage einer Kabeltülle auf einem Draht/Kabel anzugeben. Insbesondere soll die Kontrolle der montierten Kabeltülle ermöglicht werden, ohne die Breite der Maschine, insbesondere in deren Stirnbereich, massgeblich zu erhöhen. Optional soll die Breite der Maschine gegenüber bekannten Anordnungen wenn möglich sogar zu verringert werden.

Die Aufgabe wird durch die Merkmale der unabhängigen Ansprüche gelöst.

Konkret wird die Aufgabe durch eine Maschine der eingangs genannten Art gelöst,
- wobei die Maschine eine auf den Montagebereich ausgerichtete Kamera umfasst,
- wobei die Abstreifbacken drehbar mit einem Schwenkbereich zwischen ihrer Schliessstellung und ihrer Offen-Stellung gelagert sind und zumindest die Drehachse einer der Abstreifbacken von einem von der Kamera ausgehenden und durch den Montagebereich verlaufenden Beobachtungsstrahl seitlich beabstandet ist und
- wobei Abstreifbacken soweit offenbar sind, dass der ungehinderte Blick der Kamera auf die montierte Kabeltülle ermöglicht wird.

Weiterhin wird die Aufgabe der Erfindung durch ein Verfahren der eingangs genannten Art gelöst,
- bei dem zumindest eine Abstreifbacken um eine Drehachse gedreht wird, welche von einem von einer Kamera ausgehenden und durch den Montagebereich verlaufenden Beobachtungsstrahl seitlich beabstandet ist und wobei die Kamera auf den Montagebereich ausgerichtet ist, und
- bei dem die Abstreifbacken soweit geöffnet werden, dass der ungehinderte Blick der Kamera auf die montierte Kabeltülle ermöglicht wird.

Mit anderen Worten läuft jeder von der Kamera ausgehende und auf die montierte Kabeltülle treffende Beobachtungsstrahl an den geöffneten Abstreifbacken vorbei. Die geöffneten Abstreifbacken liegen somit auch vollständig ausserhalb eines keilförmigen Bereichs, der sich von der Kamera ausgehend zur Kabeltülle hin erstreckt und die Kabeltülle seitlich einschliesst.

Vorteilhaft wird damit die Kontrolle der montierten Kabeltülle ermöglicht, insbesondere ohne die Breite der Maschine massgeblich zu erhöhen. In speziellen Ausführungsformen, die im nachfolgenden noch erläutert werden, kann die Breite der genannten Maschinen gegenüber bekannten Anordnungen trotz gesteigerter Funktionalität sogar noch verringert werden.

Beispielsweise kann die Kontrolle mit einer Video-Kamera erfolgen, die den Herstellvorgang als Film erfasst. Möglich ist natürlich auch die Erfassung einzelner Bilder. Zum Beispiel kann ein Bild direkt nach dem Öffnen der Backen erfasst werden. Denkbar ist auch, dass die Bildauslösung etwas zeitverzögert nach dem Öffnen der Backen oder dem Befehl dazu erfolgt.

Vorteilhafte Weiterbildungen sind in den Figuren und in den abhängigen Patentansprüchen dargelegt.

Günstig ist es, wenn die Kamera auf den Hohldorn ausgerichtet ist. Auf diese Weise ist eine gute Sicht der Kamera auf die Kabeltülle während fast des gesamten Herstellungsprozesses (eben mit Ausnahme während der Zeitspanne, in der die Abstreifbacken geschlossen sind) gewährleistet.

Vorteilhaft ist es, wenn die Kamera oberhalb des Montagebereichs beziehungsweise oberhalb des Hohldorns angeordnet ist. Durch die spezielle Anordnung der Kamera wird die Breite der Maschine trotz des Einbaus der Kamera nicht erhöht. Weiterhin kann sich auf dem Kameraobjektiv praktisch kein Schmutz ansetzen. Alternativ wäre natürlich auch vorstellbar, die Kamera unterhalb des Montagebereichs beziehungsweise unterhalb des Hohldoms anzuordnen. Insbesondere muss die optische Achse der Kamera nicht zwangsläufig vertikal ausgerichtet sein, sondern kann auch schräg stehen.

Günstig ist es, wenn die Drehachsen der Abstreifbacken parallel zum Hohldorn ausgerichtet sind. Dadurch ergibt sich eine einfache Möglichkeit, ein Kabel / einen Draht zuzuführen.

Günstig ist es weiterhin, wenn die Drehachsen beider Abstreifbacken auf einer Seite des Hohldorns übereinander angeordnet und von diesem insbesondere gleich weit beabstandet sind. Dadurch wird eine gute Sicht der Kamera auf den Hohldorn respektive die Kabeltülle ermöglicht. Zudem kann die Maschine im Montagebereich relativ schmal ausgeführt werden.

Vorteilhaft ist es, wenn die optische Achse der Kamera durch den Hohldorn verläuft, insbesondere durch dessen Achse. Damit erscheint die zu kontrollierende Kabeltülle in der Mitte des von der Kamera aufgenommen Bildes, wodurch Effekte wie abnehmende Randschärfe und Vignettierung vernachlässigbar sind.

Besonders vorteilhaft ist es, wenn die Drehachsen beider Abstreifbacken auf einer Seite abseits des genannten Beobachtungsstrahls, insbesondere abseits der optischen Achse der Kamera, angeordnet sind und je eine Drehachse je einer Abstreifbacke auf je einer Seite abseits einer durch die Achse des Hohldorns verlaufenden und normal zu dem Beobachtungsstrahl / der optischen Achse ausgerichteten Gerade angeordnet ist. Dadurch liegt nur eine der Abstreifbacken im Blickfeld der Kamera über der zu kontrollierenden Kabeltülle, welche beim Öffnen der Abstreifbacken aufgrund der speziellen Anordnung aber leicht aus dem Blickfeld der Kamera geschwenkt werden kann.

Besonders vorteilhaft ist es in diesem Zusammenhang auch, wenn die Drehachsen der Abstreifbacken von dem Beobachtungsstrahl / der optischen Achse der Kamera und/oder der durch die Achse des Hohldorns verlaufenden und normal zu der optischen Achse ausgerichteten Gerade gleich weit beabstandet sind. Dadurch ergeben sich symmetrische Verhältnisse für die eingesetzten Abstreifbacken, wodurch insbesondere dann Vorteile resultieren, wenn die Abstreifbacken respektive Bestandteile derselben identisch aufgebaut sind.

In einer bevorzugten Ausführungsform der Maschine zur Tüllenbestückung beträgt der Schwenkbereich der Abstreifbacken zwischen ihrer Schliessstellung und ihrer Offen-Stellung im Wesentlichen 90°. Dadurch wird eine gute Sicht der Kamera auf die montierte Tülle ermöglicht, ohne dass dazu ein übermässiges Verschwenken der Abstreifbacken vonnöten wäre. Da die Abstreifbacken aufgrund der hohen Taktzahlen bei der Herstellung konfektionierter Kabel sehr schnell bewegt werden müssen, ist dies ein nicht zu vernachlässigender Vorteil. Bei vergleichsweise kleinen Tüllen ist es auch möglich, die Abstreifbacken weniger als 90° zu öffnen, wodurch die Herstellung der Kabel noch schneller erfolgen kann.

Vorteilhaft ist es weiterhin, wenn die Abstreifbacken beziehungsweise deren Bestandteile jeweils gleich ausgestaltet sind. Auf diese Weise können die Herstellungskosten und die Lagerhaltungskosten für die Abstreifbacken reduziert werden. Die Identität bezieht sich dabei nicht zwangsläufig auf die gesamte Abstreifbacke, sondern kann auch nur Teile davon betreffen, beispielsweise die Schwenkplatte.

Besonders vorteilhaft ist es auch, wenn die Abstreifbacken dazu vorbereitet sind, einander in der Schliessstellung formschlüssig zu berühren. Dadurch werden die Abstreifbacken in der Schliessstellung gut zueinander ausgerichtet, wodurch der Produktionsprozess störungsfrei ablaufen kann.

Besonders vorteilhaft ist es ausserdem, wenn die Abstreifbacken dazu vorbereitet sind, den Hohldorn in der Schliessstellung zu umgreifen und diesen zu berühren. Auf diese Weise gelingt eine besonders gute Zentrierung der Abstreifbacken zueinander und darüber hinaus zum Hohldorn. Insbesondere bei sehr kleinen Kabeldurchmessern beziehungsweise Drahtdurchmessern spielt dies eine grosse Rolle, da schon kleine Fehler in der Zentrierung zu Störungen im Produktionsablauf führen können.

An dieser Stelle wird angemerkt, dass sowohl der Formschluss zwischen den Abstreifbacken als auch die Zentrierung auf dem Hohldorn die Basis einer von den Merkmalen des Patentanspruchs 1 unabhängigen Erfindung bilden können.

In einer weiteren bevorzugten Ausführungsform der Maschine zur Tüllenbestückung umfasst eine Abstreifbacke eine Zwischenplatte sowie eine wenigstens vierfach dickere Schwenkplatte. Dadurch ist es möglich nur die Zwischenplatte auf die sich je nach zu montierender Kabeltülle ändernden Durchmesser des Hohldorns, auf den die Kabeltülle aufgeschoben wird, anzupassen. Da die Zwischenplatte wesentlich dünner ist als die Schwenkplatte, kann diese Anpassung, konkret die Anfertigung einer Ausnehmung mit zur Kabeltülle und/oder dem Draht/Kabel passender Grösse, mit vergleichsweise geringem Bearbeitungsaufwand erfolgen.

An dieser Stelle wird angemerkt, dass auch die Teilung der Abstreifbacken in Schwenkplatte und Zwischenplatte die Basis einer von den Merkmalen des Patentanspruchs 1 unabhängigen Erfindung bilden können.

Vorteilhaft ist es überdies, wenn die Abstreifbacken mit Hilfe von werkzeuglos bedienbaren Schnellverschlüssen an der Maschine, insbesondere einem Antrieb für die Abstreifbacken, montiert sind. Auf diese Weise können die Abstreifbacken, die ja jeweils für nur bestimmte Typen von Kabeltüllen einsetzbar sind, leicht getauscht werden. Die Rüstzeiten bei Änderung des hergestellten Kabels sind damit sehr kurz.

An dieser Stelle wird angemerkt, dass schliesslich auch der Schnellverschluss die Basis einer von den Merkmalen des Patentanspruchs 1 unabhängigen Erfindung bilden kann.

Besonders vorteilhaft ist es, wenn ein Schnellverschluss einen drehbar und federnd gelagerten Schliesshebel umfasst, welcher dazu eingerichtet ist, die Abstreifbacken in einer Schliessstellung mit Hilfe der Federkraft an die Maschine zu drücken, insbesondere an den Antrieb für die Abstreifbacken. Auf diese Weise wird die Äbstreifbacke sicher in ihrer Alterung verankert. Durch das Vorsehen einer Feder können auch Dickentoleranzen der Abstreifbacke gut ausgeglichen werden.

Besonders vorteilhaft ist es auch, wenn der Schnellverschluss ein gefedertes Rastelement umfasst, insbesondere einen gefederten Kugelbolzen, welches dazu ausgestaltet ist, in einer Schliessstellung des Schnellverschlusses in einer Ausnehmung der Abstreifbacke einzurasten. Auf diese Weise wird verhindert, dass sich eine Abstreifbacke trotz der im Betrieb auftretenden hohen Beschleunigung aus ihrer Halterung löst.

Vorteilhaft ist es weiterhin, wenn eine Abstreifbacke zumindest eine von ihrer Drehachse beabstandete Ausnehmung aufweist, in welche ein Bolzen des Antriebs der Abstreifbacken eingreift. Dadurch wird einerseits ein leichtes Wechseln der Abstreifbacken ermöglicht, da diese ja nur vom Antrieb abgezogen werden müssen, andererseits aber auch eine gute Drehmomentübertragung vom Antrieb auf die Abstreifbacken.

Schliesslich ist es von Vorteil, wenn ein Fehlersignal ausgegeben wird, wenn eine falsch montierte Kabeltülle entdeckt wird. Auf diese Weise können fehlerhaft montierte Kabel sofort aus dem Produktionsprozess ausgeschieden beziehungsweise von diesem abgezweigt werden. Ein aufwändiges Sortieren von konfektionierten Kabeln unterschiedlicher Qualität kann somit entfallen. Das Fehlersignal kann beispielsweise als optischer und/oder akustischer Alarm ausgegeben werden, sowie zum Beispiel auch als Signal an eine Vorrichtung, welche die Entsorgung des Kabels/Drahts mit der falsch montierten Kabeltülle bewirkt.

An dieser Stelle wird angemerkt, dass die zur Maschine für die Tüllenbestückung vorgestellten Varianten und die daraus resultierenden Vorteile sinngemäss auch auf das Verfahren zur Tüllenbestückung anwendbar sind und umgekehrt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine beispielhafte Maschine 1 für die Montage von Kabeltüllen,
- Fig. 2: einen Ausschnitt der Maschine aus Fig. 1 in einem Montagebereich in perspektivischer Ansicht,
- Fig. 3: eine schematische Darstellung der Abstreifbacken und des Hohldorns zur Montage der Kabeltülle in Vorderansicht in einer Offen-Stellung,
- Fig. 4: wie Fig. 3, nur in Seitenansicht.
- Fig. 5: wie Fig. 3 nur mit geschlossenen Abstreifbacken,
- Fig. 6: wie Fig. 5 nur im Schnitt,
- Fig. 7: einen Schnellverschluss zur Montage einer Abstreifbacke,
- Fig. 8: den Schnellverschluss aus Fig. 7 in einer Offen-Stellung und
- Fig. 9: wie Fig. 8, nur mit geschlossenem Schnellverschluss.

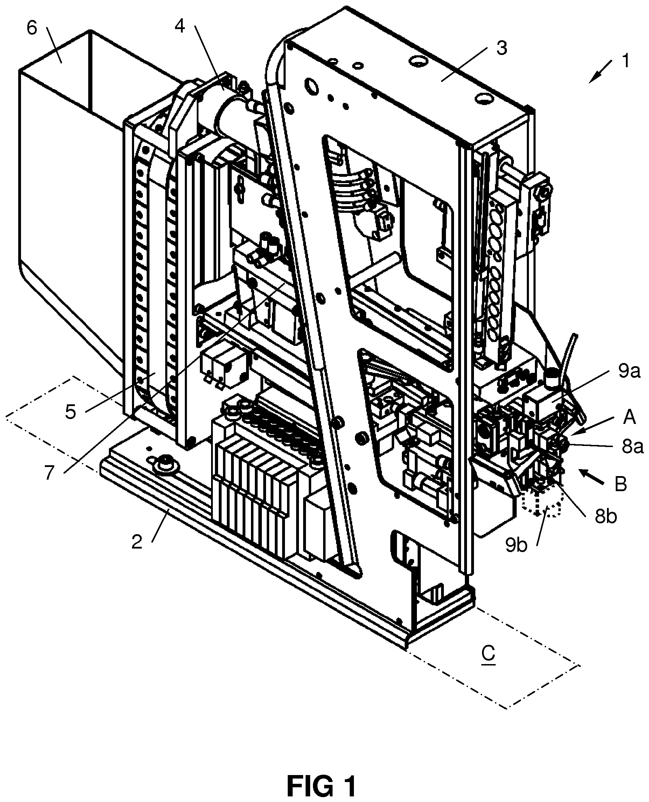

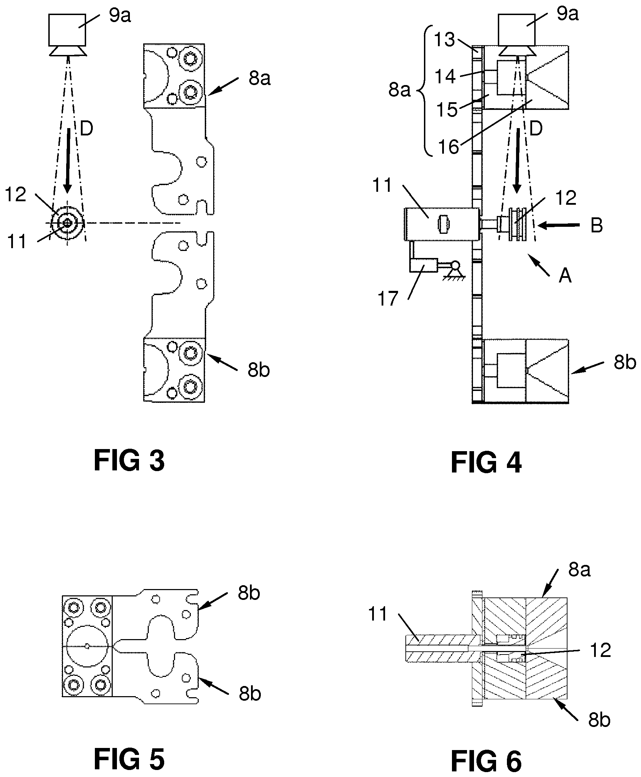

Fig. 1 zeigt eine beispielhafte Maschine 1 für die Montage von Kabeltüllen auf einem Draht/Kabel. Die Maschine 1 umfasst einen mit einer Grundplatte 2 verbundenen Rahmen 3, an welchem ein von einem Motor 4 angetriebener Kettenförderer 5 montiert ist, welcher mit einem Vorratsbehälter 6 verbunden ist. Des Weiteren umfasst die Maschine 1 eine Rüttelschiene 7, zwei Abstreifbacken 8a und 8b in einem Montagebereich A sowie eine Kamera 9a, welche auf den Montagebereich A ausgerichtet ist (siehe auch den Beobachtungsstrahl D in der Fig. 3).

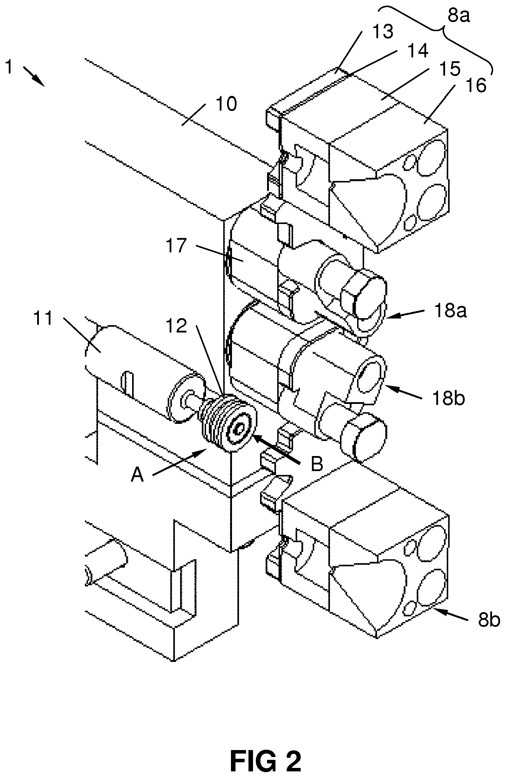

Mit Hilfe des Kettenförderers 5 werden Kabeltüllen aus dem Vorratsbehälter 6 vereinzelt auf die Rüttelschiene 7 und von dort zum Montagebereich A gefördert, wo sie auf einen Draht / ein Kabel montiert werden. Der Draht / das Kabel wird dabei in der Zufuhrrichtung B zugeführt. Details der Tüllenmontage sind den Figuren 2 bis 6 zu entnehmen.

In der Fig. 1 ist auch die von der Maschine 1 benötigte Fläche C dargestellt, welche neben der Fläche für die Grundplatte 2 auch die Projektion weiterer Maschinenteile auf den Fussboden umfasst. Die Fläche C ist nicht notwendigerweise rechteckig sondern kann sich zum Beispiel im vorderen Bereich auch verjüngen, was insbesondere dann von Vorteil ist, wenn mehrere Maschinen in eine Kreis oder Kreissegment aufgestellt werden.

An dieser Stelle wird angemerkt, dass die in der Fig. 1 dargestellte Maschine 1 lediglich beispielhaften Charakter hat, um die grundsätzliche Funktionsweise der Tüllenmontage zu illustrieren. Selbstverständlich kann die Maschine 1 auch anders als in der Fig. 1 dargestellt ausgeführt sein. Beispielsweise können die Tüllen auch auf andere Weise als angegeben vom Vorratsbehälter 6 in den Montagebereich A befördert werden, beispielsweise mit Hilfe eines Rohres oder Schlauchs, durch den die Tülle fallen gelassen oder geblasen werden.

Die Fig. 2 zeigt nun den um den Montagebereich A angeordneten Teil der Maschine 1 im Detail. In der Fig. 2 sind ein Grundträger 10 sowie ein Hohldorn 11 mit einer aufgesteckten Kabeltülle 12 zu sehen. Weiterhin sind die Abstreifbacken 8a und 8b zu erkennen, die in diesem Beispiel jeweils eine Schwenkplatte 13, eine Zwischenplatte 14, einen Tüllenkäfig 15 sowie einen Zufuhrtrichter 16 umfassen. Weiterhin sind in der Fig. 2 zwei Schwenkantriebe 17 mit zwei Schnellverschlüssen 18a und 18b dargestellt.

Die Funktion der in der Fig. 2 dargestellten Komponenten wird nun anhand der Figuren 3 bis 6 sowie 7 bis 9 näher erläutert.

Die Figuren 3 und 4 zeigen die Abstreifbacken 8a und 8b in geöffnetem Zustand in Vorderansicht (Fig. 3) sowie in Seitenansicht (Fig. 4). Weiterhin ist die Kamera 9a und deren Blickrichtung (strichpunktiert dargestellt) respektive ein auf die Kabeltülle 12 gerichteter Beobachtungsstrahl D zu sehen. Weiterhin ist in der Fig. 4 ein beispielhafter und lediglich schematisch dargestellter Antrieb 17 zu sehen (hier beispielsweise als Pneumatikzylinder ausgeführt), welcher eine Relativbewegung zwischen dem Hohldorn 11 und den Abstreifbacken 8a und 8b bewirkt. Die Figuren 5 und 6 zeigen die Abstreifbacken 8a und 8b in geschlossenem Zustand in Vorderansicht (Fig. 5) sowie im Schnitt (Fig. 6).

Ein beispielhaftes Verfahren zur Montage einer Kabeltülle 12 auf einem Draht/Kabel, umfasst nun die folgenden Schritte:
- Aufschieben der Kabeltülle 12 auf den Hohldorn 11,
- Umgreifen der Kabeltülle 12 mit den Abstreifbacken 8a und 8b, sodass die Kabeltülle 12 im Tüllenkäfig 15 aufgenommen wird (siehe insbesondere Fig. 6),
- Einschieben des Drahts/Kabels in den Hohldorn 11 durch den Zufuhrtrichter 16 in der Zufuhrrichtung B,
- Aufschieben der Kabeltülle 12 auf den Draht / das Kabel durch Ausführen einer Relativbewegung zwischen dem Hohldorn 11 und den Abstreifbacken 8a und 8b und
- Öffnen der Abstreifbacken 8a und 8b.

Vorteilhaft werden die Abstreifbacken 8a und 8b beim Öffnen gedreht, und zwar so, dass zumindest eine Abstreifbacke 8a, 8b um eine Drehachse verschwenkt wird, welche von einem von einer Kamera 9a ausgehenden und durch den Montagebereich A verlaufenden Beobachtungsstrahl D seitlich beabstandet ist. Die Abstreifbacken 8a, 8b werden dabei soweit geöffnet, dass der ungehinderte Blick der Kamera 9a auf die montierte Kabeltülle 12 ermöglicht wird (siehe insbesondere Fig. 3).

Wird eine falsch montierte Kabeltülle 12 entdeckt, so kann vorteilhaft ein Fehlersignal ausgegeben werden, beispielsweise als optischer und/oder akustischer Alarm sowie zum Beispiel auch als Signal an eine Vorrichtung, welche die Entsorgung des Kabels/Drahts mit der falsch montierten Kabeltülle 12 bewirkt.

Konkret umfasst die Maschine 1 für die Montage von Kabeltüllen 12 auf einem Draht/Kabel, somit:
- einen in einem Montagebereich A angeordneten Hohldorn 11, welcher dazu eingerichtet ist, die Kabeltülle 12 auf seinem Aussendurchmesser und den Draht / das Kabel in seinem Innendurchmesser aufzunehmen,
- zwei gegeneinander bewegbare und im Montagebereich A angeordnete Abstreifbacken 8a, 8b, welche dazu eingerichtet sind, die auf den Hohldorn 11 aufgeschobene Kabeltülle 12 in einer Schliessstellung zu umgreifen,
- einen Antrieb 17, welcher dazu eingerichtet ist, die Kabeltülle 12 auf den Draht / das Kabel durch Ausführen einer Relativbewegung zwischen dem Hohldorn 11 und den Abstreifbacken 8a, 8b aufzuschieben,
- wobei die Maschine 1 eine auf den Montagebereich A ausgerichtete Kamera 9a umfasst,
- wobei die Abstreifbacken 8a, 8b drehbar mit einem Schwenkbereich zwischen ihrer Schliessstellung und ihrer Offen-Stellung gelagert sind und zumindest die Drehachse einer der Abstreifbacken 8a, 8b von einem von der Kamera 9a, 9b ausgehenden und durch den Montagebereich A verlaufenden Beobachtungsstrahl D seitlich beabstandet ist und
- wobei die Abstreifbacken 8a, 8b soweit offenbar sind, dass der ungehinderte Blick der Kamera 9a auf die montierte Kabeltülle 12 ermöglicht wird.

Mit anderen Worten läuft jeder von der Kamera 9a ausgehende und auf die montierte Kabeltülle 12 treffende Beobachtungsstrahl D an den geöffneten Abstreifbacken 8a, 8b vorbei. Die geöffneten Abstreifbacken 8a, 8ab liegen somit auch vollständig ausserhalb eines keilförmigen Bereichs, der sich von der Kamera 9a ausgehend zur Kabeltülle 12 hin erstreckt und die Kabeltülle 12 seitlich einschliesst (siehe Fig. 3).

In diesem Beispiel ist die Kamera 9a auf den Hohldorn 11 ausgerichtet. Im Speziellen ist die Kamera 9a oberhalb des Montagebereichs A beziehungsweise oberhalb des Hohldorns 11 angeordnet. Alternativ kann die Kamera 9b auch unterhalb des Montagebereichs A beziehungsweise unterhalb des Hohldorns 11 angeordnet sein (in der Fig. 1 strichliert dargestellt).

Weiterhin sind die Drehachsen der Abstreifbacken 8a, 8b parallel zum Hohldorn 11 ausgerichtet. Insbesondere sind die Drehachsen beider Abstreifbacken 8a, 8b auf einer Seite des Hohldorns 11 übereinander angeordnet und von diesem insbesondere gleich weit beabstandet (siehe Fig. 3).

Vorteilhaft verläuft die optische Achse der Kamera 9a durch den Hohldorn 11, insbesondere durch dessen Achse. Vorteilhaft ist es darüber hinaus, wenn wie in der Fig. 3 zu sehen ist, die Drehachsen beider Abstreifbacken 8a, 8b auf einer Seite abseits des genannten Beobachtungsstrahls D, insbesondere abseits der optischen Achse der Kamera 9a, angeordnet sind und je eine Drehachse je einer Abstreifbacke 8a, 8b auf je einer Seite abseits einer durch die Achse des Hohldorns 11 verlaufenden und normal zu dem Beobachtungsstrahl D / der optischen Achse ausgerichteten Gerade angeordnet ist.

In der speziellen in der Fig. 3 dargestellten Anordnung sind die Drehachsen der Abstreifbacken (8a, 8b) von dem Beobachtungsstrahl D / der optischen Achse der Kamera 9a überdies gleich weit beabstandet. Weiterhin sind sie auch von der durch die Achse des Hohldorns 11 verlaufenden und normal zu der optischen Achse ausgerichteten Gerade gleich weit beabstandet.

Der Schwenkbereich der Abstreifbacken 8a, 8b zwischen ihrer Schliessstellung und ihrer Offen-Stellung beträgt in diesem Beispiel 90°. Denkbar ist aber auch die Wahl eines anderen Winkels, solange die Sicht der Kamera 9a auf die Kabeltülle 12 gewährleistet ist.

In Fig. 6 ist weiterhin zu sehen, dass die Abstreifbacken 8a, 8b den Hohldorn 11 in der Schliessstellung umgreifen und diesen berühren. Auf diese Weise ist eine gute Zentrierung der Abstreifbacken 8a, 8b zum Hohldorn 11 gewährleistet. Zusätzlich oder alternativ dazu können die Abstreifbacken 8a, 8b einander in der Schliessstellung formschlüssig berühren. Beispielsweise können dazu entsprechende Vorsprünge beziehungsweise Ausnehmungen an den Abstreifbacken 8a, 8b vorgesehen sein.

Im Zusammenhang mit einer guten Zentrierung ist es auch von Vorteil, wenn die Schwenkplatte 13 wenigstens vierfach dicker als die Zwischenplatte 14 ist. Auf diese Weise kann die Zwischenplatte 14 mit nur geringem Bearbeitungsaufwand beziehungsweise Materialeinsatz an verschiedene Hohldorne 11 angepasst werden. Für verschiedene Kabeltüllen 12 respektive Kabeldurchmesser können somit verschiedene Zwischenplatten 14 mit unterschiedlich grossen halbkreisförmigen Ausnehmungen vorgesehen werden, die aufgrund der geringen Materialdicke der Zwischenplatten 14 vergleichsweise einfach herzustellen sind.

Von Vorteil ist es auch, wenn die Abstreifbacken 8a, 8b oder - wie in den Figuren dargestellt - wenigstens Bestandteile derselben (hier die Schwenkplatten 13) jeweils gleich ausgestaltet sind.

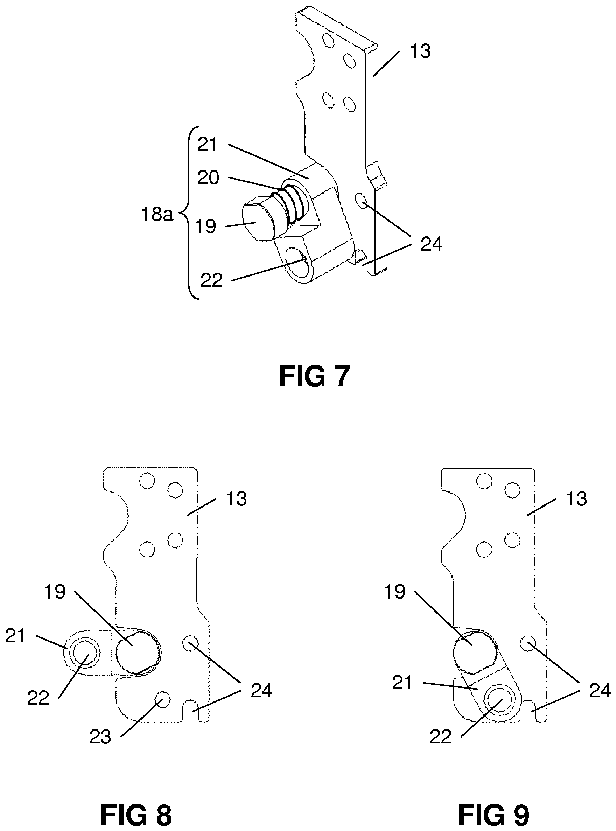

Fig. 7 zeigt nun die Schwenkplatte 13 einer Abstreifbacke 8a, 8b in Kombination mit einem werkzeuglos bedienbaren Schnellverschlüssen 18a in perspektivischer Ansicht. Die Figuren 8 und 9 zeigen die in Fig. 7 dargestellte Anordnung jeweils in Draufsicht, einmal mit offenem Schnellverschluss 18a (Fig. 8) und einmal mit geschlossenem Schnellverschluss 18a (Fig. 9)

Der Schnellverschluss 18a umfasst einen um einen Bolzen 19 drehbar und mit Hilfe einer Feder 20 federnd gelagerten Schliesshebel 21, welcher dazu eingerichtet ist, die Abstreifbacken 8a, 8b in einer Schliessstellung mit Hilfe der Federkraft an die Maschine 1 zu drücken, in diesem Beispiel konkret an die Antriebe 17 für die Abstreifbacken 8a, 8b. Die Schnellverschlüsse 18a, 18b sind in diesem Beispiel ebenfalls an den Antrieben 17 montiert.

Vorteilhaft umfasst der Schnellverschluss 18a wie in diesem Beispiel ein gefedertes Rastelement 22, konkret einen gefederten Kugelbolzen 22, welcher dazu ausgestaltet ist, in einer Schliessstellung des Schnellverschlusses 18a in einer Ausnehmung 23 der Abstreifbacke 8a, 8b einzurasten. Auf diese Weise wird die Abstreifbacke 8a, 8b sicher gehalten und löst sich auch bei hohen Beschleunigungen nicht aus ihrer Halterung.

Um das Drehmoment von den Antrieben 17 auf die Abstreifbacken 18a und 18b zu übertragen, können die Abstreifbacken 8a, 8b wie in den Figuren 7 bis 9 dargestellt von ihrer Drehachse beabstandete Ausnehmungen 24 aufweisen, in welche Bolzen der Antriebe 17 eingreifen.

Vorteilhaft wird durch die vorgestellte Maschine 1 für die Montage einer Kabeltülle 12 auf einem Draht/Kabel die Kontrolle der montierten Kabeltülle 12 ermöglicht, insbesondere ohne die Grundfläche C respektive die Breite der Maschine 1 massgeblich zu erhöhen. Im Speziellen wird dies dadurch erreicht, dass die Kamera 9a, 9b oberhalb/unterhalb des Montagebereichs angeordnet ist, und die Abstreifbacken 8a, 8b bei der Betätigung verschwenkt werden. Dadurch resultiert ein verringerter Platzbedarf gegenüber linear verschiebbaren Abstreifbacken.

Die vorgestellte Maschine 1 soll das erfindungsgemässe Prinzip lediglich illustrieren. Auch wenn es sich dabei um eine bevorzugte Ausführungsform handelt, sind natürlich abweichende Bauformen gleichwertig einsetzbar. Insbesondere kann die Kamera 9a, 9b auch seitlich versetzt zum Montagebereich A oder überhaupt mit horizontal ausgerichteter optischer Achse angeordnet sein.

Einzelne Teile der Offenbarung können auch unabhängig von den Merkmalen der unabhängigen Patentansprüche angewendet werden. Insbesondere gilt dies für den Schnellverschluss 18a, 18b, die Teilung der Abstreifbacken 8a, 8b in Schwenkplatte 13 und Zwischenplatte 14 sowie die Zentrierung der Abstreifbacken 8a, 8b auf dem Montagebereich 11.

### Bezugszeichenliste

- 1: Maschine für die Montage von Kabeltüllen
- 2: Grundplatte
- 3: Rahmen
- 4: Motor
- 5: Kettenförderer
- 6: Vorratsbehälter
- 7: Rüttelschiene
- 8a, 8b: Abstreifbacken
- 9a, 9b: Kamera
- 10: Grundträger
- 11: Hohldorn
- 12: Kabeltülle
- 13: Schwenkplatte
- 14: Zwischenplatte
- 15: Tüllenkäfig
- 16: Zufuhrtrichter
- 17: Antrieb für Abstreifbacken
- 18a, 18b: Schnellverschluss
- 19: Bolzen
- 20: Feder
- 21: Schliesshebel
- 22: Rastelement/Kugelbolzen
- 23: Ausnehmung für Rastelement/Kugelbolzen
- 24: Ausnehmungen für Antriebsbolzen
- A: Montagebereich
- B: Zufuhrrichtung für den Draht / das Kabel
- C: Grundfläche
- D: Beobachtungsstrahl

## Patentansprüche

1. Maschine (1) für die Montage von Kabeltüllen (12) auf einem Draht/Kabel, umfassend
- einen in einem Montagebereich (A) angeordneten Hohldorn (11), welcher dazu eingerichtet ist, die Kabeltülle (12) auf seinem Aussendurchmesser und den Draht / das Kabel in seinem Innendurchmesser aufzunehmen,
- zwei gegeneinander bewegbare und im Montagebereich (A) angeordnete Abstreifbacken (8a, 8b), welche dazu eingerichtet sind, die auf den Hohldorn (11) aufgeschobene Kabeltülle (12) in einer Schliessstellung zu umgreifen, und
- einen Antrieb (17), welcher dazu eingerichtet ist, die Kabeltülle (12) auf den Draht / das Kabel durch Ausführen einer Relativbewegung zwischen dem Hohldorn (11) und den Abstreifbacken (8a, 8b) aufzuschieben,
- wobei die Abstreifbacken (8a, 8b) drehbar mit einem Schwenkbereich zwischen ihrer Schliessstellung und ihrer Offen-Stellung gelagert sind,
**dadurch gekennzeichnet,**
- **dass** die Maschine (1) eine auf den Montagebereich (A) ausgerichtete Kamera (9a, 9b) umfasst,
- **dass** zumindest die Drehachse einer der Abstreifbacken (8a, 8b) von einem von der Kamera (9a, 9b) ausgehenden und durch den Montagebereich (A) verlaufenden Beobachtungsstrahl (D) seitlich beabstandet ist und
- die Abstreifbacken (8a, 8b) soweit offenbar sind, dass der ungehinderte Blick der Kamera (9a, 9b) auf die montierte Kabeltülle (12) ermöglicht wird.

2. Maschine (1) nach Anspruch 1, **dadurch gekennzeichnet, dass** die Kamera (9a, 9b) auf den Hohldorn (11) ausgerichtet ist und vorzugsweise oberhalb des Montagebereichs (A) beziehungsweise oberhalb des Hohldoms (11) angeordnet ist, und/oder **dass** die optische Achse der Kamera (9a, 9b) durch den Hohldorn (11) verläuft..

3. Maschine (1) nach einem der Ansprüche 1 oder 2, **dadurch gekennzeichnet, dass** die Drehachsen der Abstreifbacken (8a, 8b) parallel zur Achse des Hohldorns (11) ausgerichtet sind und/oder vorzugsweise auf einer Seite des Hohldorns (11) übereinander angeordnet sind.

4. Maschine (1) nach einem der Ansprüche 1 bis 3, **dadurch gekennzeichnet, dass** die Drehachsen beider Abstreifbacken (8a, 8b) auf einer Seite abseits des genannten Beobachtungsstrahls (D) angeordnet sind und je eine Drehachse je einer Abstreifbacke (8a, 8b) auf je einer Seite abseits einer durch die Achse des Hohldorns (11) verlaufenden und normal zu dem Beobachtungsstrahl (D) / der optischen Achse ausgerichteten Gerade angeordnet ist.

5. Maschine (1) nach Anspruch 4, **dadurch gekennzeichnet, dass** die Drehachsen der Abstreifbacken (8a, 8b) von dem Beobachtungsstrahl (D) / der optischen Achse der Kamera (9a, 9b) und/oder der durch die Achse des Hohldorns (11) verlaufenden und normal zu der optischen Achse ausgerichteten Gerade gleich weit beabstandet sind.

6. Maschine (1) nach einem der Ansprüche 1 bis 5, **dadurch gekennzeichnet, dass** der Schwenkbereich der Abstreifbacken (8a, 8b) zwischen ihrer Schliessstellung und ihrer Offen-Stellung im Wesentlichen 90° beträgt und/oder **dass** die Abstreifbacken (8a, 8b) beziehungsweise Bestandteile (13) derselben jeweils gleich ausgestaltet sind.

7. Maschine (1) nach einem der Ansprüche 1 bis 6, **dadurch gekennzeichnet, dass** die Abstreifbacken (8a, 8b) dazu vorbereitet sind, einander in der Schliessstellung formschlüssig zu berühren.

8. Maschine (1) nach einem der Ansprüche 1 bis 7, **dadurch gekennzeichnet, dass** die Abstreifbacken (8a, 8b) dazu vorbereitet sind, den Hohldorn (11) in der Schliessstellung zu umgreifen und diesen zu berühren.

9. Maschine (1) nach einem der Ansprüche 1 bis 8, **dadurch gekennzeichnet, dass** eine Abstreifbacke (8a, 8b) eine Zwischenplatte (14) sowie eine wenigstens vierfach dickere Schwenkplatte (13) umfasst.

10. Maschine (1) nach einem der Ansprüche 1 bis 9, **dadurch gekennzeichnet, dass** die Abstreifbacken (8a, 8b) mit Hilfe von werkzeuglos bedienbaren Schnellverschlüssen (18a, 18b) an der Maschine (1) montiert sind.

11. Maschine (1) nach Anspruch 10, **dadurch gekennzeichnet, dass** ein Schnellverschluss (18a, 18b) einen drehbar und federnd gelagerten Schliesshebel (21) umfasst, welcher dazu eingerichtet ist, die Abstreifbacken (8a, 8b) in einer Schliessstellung mit Hilfe der Federkraft an die Maschine (1) zu drücken.

12. Maschine (1) nach Anspruch 10 oder 11, **dadurch gekennzeichnet, dass** der Schnellverschluss (18a, 18b) ein gefedertes Rastelement (22) umfasst, welches dazu ausgestaltet ist, in einer Schliessstellung des Schnellverschlusses (18a, 18b) in einer Ausnehmung (23) der Abstreifbacke (8a, 8b) einzurasten.

13. Maschine (1) nach einem der Ansprüche 1 bis 12, **dadurch gekennzeichnet, dass** eine Abstreifbacke (8a, 8b) zumindest eine von ihrer Drehachse beabstandete Ausnehmung (24) aufweist, in welche ein Bolzen des Antriebs der Abstreifbacken (8a, 8b) eingreift.

14. Verfahren zur Montage einer Kabeltülle(12) auf einem Draht/Kabel, umfassend die Schritte:
- Aufschieben der Kabeltülle (12) auf einen Hohldorn (11),
- Umgreifen der Kabeltülle (12) mit schliessbaren beziehungsweise offenbaren Abstreifbacken (8a, 8b),
- Einschieben des Drahts/Kabels in den Hohldorn (11),
- Aufschieben der Kabeltülle (12) auf den Draht / das Kabel durch Ausführen einer Relativbewegung zwischen dem Hohldorn (11) und den Abstreifbacken (8a, 8b)und
- Öffnen der Abstreifbacken (8a, 8b), wobei die Abstreifbacken (8a, 8b) beim Öffnen gedreht werden,
**dadurch gekennzeichnet,**
- **dass** zumindest eine Abstreifbacke um eine Drehachse gedreht wird, welche von einem von einer Kamera (9a, 9b) ausgehenden und durch den Montagebereich (A) verlaufenden Beobachtungsstrahl (D) seitlich beabstandet ist und wobei die Kamera (9a, 9b) auf den Montagebereich (A) ausgerichtet ist, und
- **dass** die Abstreifbacken (8a, 8b) soweit geöffnet werden, dass der ungehinderte Blick der Kamera (9a, 9b) auf die montierte Kabeltülle (12) ermöglicht wird.

15. Verfahren nach Anspruch 14, **dadurch gekennzeichnet, dass** ein Fehlersignal ausgegeben wird, wenn eine falsch montierte Kabeltülle (12) entdeckt wird.

## Claims

1. A machine (1) for fitting cable bushings (12) on a wire/cable, comprising
- a hollow mandrel (11) which is arranged in a fitting region (A) and which is designed to receive the cable bushing (12) on its outer diameter and the wire/cable in its inner diameter,
- two stripping jaws (8a, 8b) movable towards one another and arranged in the fitting region (A), said stripping jaws being designed to engage around the cable bushing (12) pushed onto the hollow mandrel (11) in a closed position, and
- a drive (17), which is designed to push the cable bushing (12) onto the wire/cable by performing a relative movement between the hollow mandrel (11) and in the stripping jaws (8a, 8b),
- wherein the stripping jaws (8a, 8b) are mounted rotatably with a swivelling range between their closed position and their open position,
**characterised in that**
- the machine (1) comprises a camera (9a, 9b) aligned onto the fitting region (A),
- at least the rotation axis of one of the stripping jaws (8a, 8b) is laterally spaced apart from an observation beam (D) exiting from the camera (9a, 9b) and running through the fitting region (A) and
- the stripping jaws (8a, 8b) can be opened to an extent such that an unimpeded view of the camera (9a, 9b) onto the fitted cable bushing (12) is enabled.

2. The machine (1) according to claim 1, **characterised in that** the camera (9a, 9b) is aligned onto the hollow mandrel (11) and is preferably arranged above the fitting region (A) or above the hollow mandrel (11), and/or that the optical axis of the camera (9a, 9b) runs through the hollow mandrel (11).

3. The machine (1) according to any one of claims 1 or 2, **characterised in that** the rotation axes of the stripping jaws (8a, 8b) are aligned parallel with the axis of the hollow mandrel (11) and/or are preferably arranged one above the other on one side of the hollow mandrel (11).

4. The machine (1) according to any one of claims 1 to 3, **characterised in that** the rotation axes of the two stripping jaws (8a, 8b) are arranged on one side away from the aforementioned observation beam (D) and a rotation axis of a stripping jaw (8a, 8b) is arranged in each case on one side away from a straight line running through the axis of the hollow mandrel (11) and aligned normal to the observation beam (D)/the optical axis.

5. The machine (1) according to claim 4, **characterised in that** the rotation axes of the stripping jaws (8a, 8b) are spaced apart equidistant from the observation beam (D)/the optical axis of the camera (9a, 9b) and/or the straight line running through the axis of the hollow mandrel (11) and aligned normal to the optical axis.

6. The machine (1) according to any one of claims 1 to 5, **characterised in that** the swivelling range of the stripping jaws (8a, 8b) between their closed position and their open position amounts to essentially 90° and/or that the stripping jaws (8a, 8b) or components (13) thereof are constituted identically in each case.

7. The machine (1) according to any one of claims 1 to 6, **characterised in that** the stripping jaws (8a, 8b) are set up to make contact in a form-fit manner with one another in the closed position.

8. The machine (1) according to any one of claims 1 to 7, **characterised in that** the stripping jaws (8a, 8b) are set up to engage around the hollow mandrel (11) in the closed position and to make contact with the latter.

9. The machine (1) according to any one of claims 1 to 8, **characterised in that** a stripping jaw (8a, 8b) comprises an intermediate plate (14) as well as an at least four times thicker swivelling plate (13).

10. The machine (1) according to any one of claims 1 to 9, **characterised in that** the stripping jaws (8a, 8b) are fitted to the machine (1) with the aid of quick-action closures (18a, 18b) capable of being operated without tools.

11. The machine (1) according to claim 10, **characterised in that** a quick-action closure (18a, 18b) comprises a closing lever (21) mounted rotatably and in a spring-loaded manner, said closing lever being designed to press the stripping jaws (8a, 8b) against the machine (1) in a closed position with the aid of the spring force.

12. The machine (1) according to claim 10 or 11, **characterised in that** the quick-action closure (18a, 18b) comprises a spring-loaded locking element (22), which is designed to lock home in a recess (23) of the stripping jaws (8a, 8b) in a closed position of the quick-action closure (18a, 18b).

13. The machine (1) according to any one of claims 1 to 12, **characterised in that** a stripping jaw (8a, 8b) comprises at least one recess (24) spaced apart from its rotation axis, into which recess a bolt of the drive of the stripping jaws (8a, 8b) engages.

14. A method for fitting a cable bushing (12) on a wire/cable, comprising the steps:
- pushing the cable bushing (12) onto a hollow mandrel (11),
- engaging around the cable bushing (12) with stripping jaws (8a, 8b) capable of being closed or opened,
- pushing the wire/cable into the hollow mandrel (11),
- pushing the cable bushing (12) onto the wire/cable by performing a relative movement between the hollow mandrel (11) and the stripping jaws (8a, 8b) and
- opening the stripping jaws (8a, 8b), wherein the stripping jaws (8a, 8b) are rotated during the opening,
**characterised in that**
- at least once stripping jaw is rotated around a rotation axis, which is laterally spaced apart from observation beam (D) exiting from a camera (9a, 9b) and running through the fitting region (A) and wherein the camera (9a, 9b) is aligned onto the fitting region (A), and
- the stripping jaws (8a, 8b) are opened to an extent such that an unimpeded view of the camera (9a, 9b) onto the fitted cable bushing (12) is enabled.

15. The method according to claim 14, **characterised in that** an error signal is emitted when an incorrectly fitted cable bushing (12) is detected.

## Revendications

1. Machine (1) pour le montage de passe-câbles (12) sur un fil/câble, comprenant
- un mandrin creux (11) disposé dans une zone de montage (A), lequel est agencé pour recevoir le passe-câbles (12) sur son diamètre extérieur et le fil/câble dans son diamètre intérieur,
- deux mâchoires à dénuder (8a, 8b) disposées mobiles l'une contre l'autre et dans la zone de montage (A), lesquelles sont agencées pour saisir en entourant le passe-câbles (12) enfilé sur le mandrin creux (11) dans une position de fermeture, et
- un système d'entraînement (17), lequel est agencé pour enfiler le passe-câbles (12) sur le fil/câble en exécutant un mouvement relatif entre le mandrin creux (11) et les mâchoires à dénuder (8, 8b),
- les mâchoires à dénuder (8a, 8b) étant logées pouvant tourner avec une zone de pivotement entre leur position de fermeture et leur position d'ouverture,
**caractérisée en ce que**
- la machine (1) comprend une caméra (9a, 9b) orientée sur la zone de montage (A),
- au moins l' axe de rotation d'une des mâchoires à dénuder (8a, 8b) est latéralement à distance d'un rayon d'observation (D) partant de la caméra (9a, 9b) et passant par la zone de montage (A), et
- les mâchoires à dénuder (8a, 8b) peuvent être ouvertes à tel point que la vision libre de la caméra (9a, 9b) est permise sur le passe-câbles (12) monté.

2. Machine (1) selon la revendication (1), **caractérisée en ce que** la caméra (9a, 9b) est orientée sur le mandrin creux (11) et est de préférence au-dessus de la zone de montage (A) ou est disposée au-dessus du mandrin creux (11), et/ou **en ce que** l' axe optique de la caméra (9a, 9b) passe par le mandrin creux (11).

3. Machine (1) selon l'une quelconque des revendications 1 ou 2, **caractérisée en ce que** les axes de rotation des mâchoires à dénuder (8a, 8b) sont orientés parallèlement à l'axe du mandrin creux (11) et/ou sont de préférence disposés l'un au-dessus de l'autre sur un côté du mandrin creux (11).

4. Machine (1) selon l'une quelconque des revendications 1 à 3, **caractérisée en ce que** las axes de rotation des deux mâchoires à dénuder (8a, 8b) sont disposés sur un côté à l'écart du rayon d'observation (D) cité et un axe de rotation de chaque mâchoire à dénuder (8a, 8b) est disposé sur un côté à l'écart d'une droite passant par l'axe du mandrin creux (11) et orientée perpendiculairement au rayon d'observation (D)/ à l'axe optique.

5. Machine (1) selon la revendication 4, **caractérisée en ce que** les axes de rotation des mâchoires à dénuder (8a, 8b) sont éloignés à une même distance du rayon d'observation (D) / de l' axe optique de la caméra (9a, 9b) et/ou de la droite passant par l'axe du mandrin creux (11) et orientée perpendiculairement à l'axe optique.

6. Machine (1) selon l'une quelconque des revendications 1 à 5, **caractérisée en ce que** la zone de pivotement des mâchoires à dénuder (8a, 8b) est pour l'essentiel de 90° entre leur position de fermeture et leur position d'ouverture et/ou **en ce que** les mâchoires à dénuder (8a, 8b) et/ou composants (13) de celles-ci sont conçus respectivement de façon identique.

7. Machine (1) selon l'une quelconque des revendications 1 à 6, **caractérisée en ce que** les mâchoires à dénuder (8a, 8b) sont préparées pour entrer en contact l'une dans l'autre par conformité de forme dans la position de fermeture.

8. Machine (1) selon l'une quelconque des revendications 1 à 7, **caractérisée en ce que** les mâchoires à dénuder (8a, 8b) sont préparées pour saisir en entourant le mandrin creux (11) dans la position de fermeture et entrer en contact avec celui-ci.

9. Machine (1) selon l'une quelconque des revendications 1 à 8, **caractérisée en ce qu'**une mâchoire à dénuder (8a, 8b) comprend une plaque intermédiaire (14) ainsi qu'au moins une plaque de pivotement (13) quatre fois plus épaisse.

10. Machine (1) selon l'une quelconque des revendications 1 à 9, **caractérisée en ce que** les mâchoires à dénuder (8a, 8b) sont montées sur la machine (1) à l'aide de fermetures rapides (18a, 18b) manipulables sans outil.

11. Machine (1) selon la revendication 10, **caractérisée en ce qu'**une fermeture rapide (18a, 18b) comprend un levier de fermeture (21) logé pouvant tourner et de manière élastique, lequel est agencé pour appuyer les mâchoires à dénuder (8a, 8b) sur la machine (1) dans une position de fermeture à l'aide de la force élastique.

12. Machine (1) selon la revendication 10 ou 11, **caractérisée en ce que** la fermeture rapide (18a, 18b) comprend un élément d'encliquetage à ressort (22), lequel est conçu pour s'enclencher dans une cavité (23) de la mâchoire à dénuder (8a, 8b) dans une position de fermeture de la fermeture rapide (18a, 18b).

13. Machine (1) selon l'une quelconque des revendications 1 à 12, **caractérisée en ce qu'**une mâchoire à dénuder (8a, 8b) comporte au moins une cavité (24) éloignée de son axe de rotation dans laquelle vient en prise un boulon du système d'entraînement des mâchoires à dénuder (8a, 8b).

14. Procédé pour le montage d'un passe-câbles (12) sur un fil/câble, comprenant les étapes suivantes :
- enfilage du passe-câbles (12) sur un mandrin creux (11),
- saisie par entourage du passe-câbles (12) avec des mâchoires à dénuder (8a, 8b) pouvant être fermées ou ouvertes,
- introduction du fil/câble dans le mandrin creux (11),
- enfilage du passe-câbles (12) sur le fil/câble en exécutant un mouvement relatif entre le mandrin creux (11) et les mâchoires à dénuder (8a, 8b), et
- ouverture des mâchoires à dénuder (8a, 8b), les mâchoires à dénuder (8a, 8b) étant tournées lors de l'ouverture,
**caractérisé en ce que**
- au moins une mâchoire à dénuder est tournée autour d'un axe de rotation, lequel est latéralement à distance d'un rayon d'observation (D) partant d'une caméra (9a, 9b) et passant par la zone de montage (A) et la caméra (9a, 9b) étant orientée sur la zone de montage (A), et
- les mâchoires à dénuder (8a, 8b) sont ouvertes à tel point que la vision libre de la caméra (9a, 9b) est permise sur le passe-câbles (12) monté.

15. Procédé selon la revendication 14, **caractérisé en ce qu'**un signal de défaut est émis, lorsqu'un passe-câbles (12) mal monté est découvert.
